# EUROPEAN PATENT APPLICATION

(11) **EP 2 515 272 A1**
(43) Date of publication of application: **24.10.2012**
(21) Application number: 10837278.0
(22) Date of filing: 14.12.2010
(51) Int. Cl.: G06T 7/00, G06T 1/00

(54) **TEXTILE ARTICLE IDENTIFICATION DEVICE AND TEXTILE ARTICLE GRIPPING SYSTEM**

(30) Priority: 15.12.2009 JP 2009284499
(71) Applicant: Seven Dreamers Laboratories, Inc., Red Wood Shores, CA 94065 (US)
(72) Inventor: KITAGAWA, Hiroshi, Otsu-shi Shiga 520-2153 (JP); OSAWA, Fumiaki, Nagoya-shi Aichi 457-0819 (JP)
(74) Representative: Horn Kleimann Waitzhofer
(86) International application number: PCT/JP2010/007256
(87) International publication number: WO 2011/074246

(57) **Abstract**

A fabric product identification device which can identify a type of a fabric product easily in a high accuracy and a fabric product handling system including the fabric product identification device is provided. A fabric product handling system 100 grasps a fabric product being placed on a first table 40A before setting out and resetting the fabric product on a second table 40B. The system 100 comprises: a fabric product handling robot 10, namely a handling device; a fabric product identification device 50 having the second table 40B and a part of a controller 30; and a camera 16. Fabric product distinction software, a principle part of the distinction part, distinguishes a specific part of the fabric product based on a quantity of light rays passing through the fabric product from image data being imaged with the camera 16.

## Description

### Background of the Invention

### Field of the Invention

The present invention relates to an automatic fabric product identification device and an automatic handling system. The fabric products are clothes, towels, or sheets, for example.

### Description of the Related Art

Recently, development of robots, which can handle, for example convey, stack, and fold fabric product automatically, has been required in the apparel industry, the cleaning industry, the linen supply industry, the welfare industry, and the health industry.

A technology for recognition of characterizing parts of the fabric product is suggested, as one technology for automatic handling of the fabric product. For example, Patent Document 1, JP-A-2004-5361, discloses a method for presuming a condition of cloth based on an input image. This method comprises: a step for making a model having a basic form of the cloth; a step for presuming all possible forms of the cloth when a point of the cloth is grasped; a step for getting feature quantities from the input image of the grasped cloth by analyzing the presumed forms; a step for determining the nearest presumed forms by calculation, and a step for presuming the condition of the cloth.

### Summary of the Invention

The method disclosed in the Patent Document 1 can presume a condition of apparel. But identification of fabric products such as cloths is difficult for the method.

A main subject of the present invention is to provide a fabric product identification device, which can identify the type of the fabric product easily in a high accuracy, and a fabric product handling system including the fabric product identification device.
(1) A first aspect of the invention is directed to a fabric product identification device. The fabric product identification device comprises: a table, which the fabric product is placed on, having a transparent part which light rays pass through; a light source provided on the opposite side of a side of the transparent part which the fabric product is placed on; an imager imaging and making image data of the fabric product which is illuminated by the light rays, and provided at the side of the transparent part; and a distinction part distinguishing a specific part of the fabric product based on a quantity of the passed light rays from the image data.

According to the above constituents, the fabric product being placed on the transparent part of the table can be illuminated by the light source. And the image data for measuring the quantity of the passed light rays can be made. The distinction part can distinguish a specific part of the fabric product based on the quantity of the passed light rays. The specific part means for example collars of the cloths, which the light rays are hard to pass through. And "a fabric product" is a cloth, for example. By distinguishing the specific part of the fabric product, a characterizing part, such as a collar of the cloth, can be recognized. The type of the fabric product can be identified easily in a high accuracy based on the characterizing part of the fabric product. It is possible to recognize the characterizing part of the fabric product, such as the cloth, in a non-hold state, namely the cloth not let out. In a result, it is possible to identify the type of the fabric product based on the characterizing part.
(2) In the fabric product identification device being described above (1), it is preferred that the distinction part distinguishes the specific part of the fabric product based on the quantity of the passed light rays. When the quantity of the passed light rays of the part is higher than a predetermined value or lower than a predetermined value, or in a predetermined range, the part can be the specific part. "The part where the quantity of the passed light rays is lower than a predetermined value" is a part that the ray is hard to pass through. For example, the part may be a collar of clothes made of a usual fabric. The characterizing part of the fabric product may be made of a transparent material or a mesh material. In this case, the part, where the quantity of the passed light rays is higher than a predetermined value, is a part that the ray is easy to pass through. For example, the part may be a collar made of a transparent material of a mesh material. And the part, where the quantity of the passed light rays is in a range, is not harder to pass through than ordinary clothes and not easier to pass through than a transparent material or a mesh material. The part in a range may be a collar made of a semi-transparent material, for example.

According to the device being described above (2), the distinction of the distinction part of the fabric product becomes easy. Consequently, a type of the fabric product can be easily distinguished based on the distinction part of the fabric product.
(3) In the fabric product identification device described above (1) or (2), it is preferred that the distinction part distinguishes a continuous area, which is an area having parts side by side, as a specific part of the fabric product. The quantity of the passed light rays of each part is smaller than a predetermined value or higher than a predetermined value, or within a predetermined range.

According to the device being described above (3), the device distinguishes the continuous area, where the quantity of the passed light rays is smaller than the predetermined value or larger than the predetermined value, or within the predetermined range, as the specific part of the fabric product. Consequently, the characterizing part of the fabric product can be recognized with a high accuracy. And a type of the fabric product can be identified based on the characterizing part of the fabric product more easily.
(4) In the fabric product identification device described above (1) to (3), it is preferred that the fabric product identification device includes an image processor. The image processor classifies a distribution of the quantity of the passed light rays by a range of the quantity in the image data of the fabric product, sections the image data into some areas by the range of the quantity of the passed light rays, and displays the areas with different brightness by an image processing. By processing the image data, the image processor makes processed image data. Furthermore, the distinction part distinguishes a position of the specific part of the fabric product based on the brightness data in the processed image data.

According to the device being described above (4), the distinction part distinguishes the specific part of the fabric product based on the brightness data, which is obtained by the image processor and the quantity data of the passed light rays at the specific part of the fabric product. The device can recognize the characterizing part of the fabric product. And the type of the fabric product can be identified based on the characterizing part of the fabric product with a high accuracy. In addition, when a brightness datum in the processed image data corresponds to none of the quantity data of the passed light rays, the distinction part may judge that the specific part of the fabric product does not exist in the processed image data.
(5) In the fabric product identification device being described above (4), it is preferred that the fabric product identification device includes a shape recognizing part for recognizing shape of each area and extracting shape image data of the each area. And it is preferred that the distinction part may distinguish the position of the specific part based on shape image data and predetermined shape image data of the specific part of the fabric product.

According to the device being described above (5), the specific part of the fabric product can be distinguished steadily by using the shape of each area. Consequently, the specific part can be recognized with a higher degree of accuracy and the type of the fabric product can be identified with a higher degree of accuracy. In addition, when a shape image datum obtained by a shape image data extracting part corresponds to none of the predetermined shape image data of the specific part, the distinction part may judge that the specific part of the fabric product does not exist in the processed image data.
(6) In the fabric product identification device being described above (1) to (5), it is preferred that the fabric product identification device includes a light quantity controller for controlling a quantity of the light rays from the light source based on the information of the quantity of the passed light rays from the image processing part.

According to the device being described above (6), the amount of the light rays from the light source may be controlled according to fabric material or thickness of the fabric product. Consequently, the characterizing part of the fabric product can be recognized more easily. As a result, the type of the fabric product can be identified easily. In addition, the above brightness data may be adjusted appropriately based on the quantity of the light rays.
(7) From another aspect, in the fabric product identification device being described above (1) to (5), the light rays may be infrared light and the imager may make images from the infrared light. And the fabric product identification device may include an intensity controller. The intensity controller controls an intensity of the infrared light from the light source based on the information of the quantity of the passed infrared light rays from the image processing part.

According to the device being described above (7), the intensity of the infrared light rays from the light source may be controlled according to the fabric material or the thickness of the fabric product. Consequently, the characterizing part of the fabric product can be recognized more easily. As a result, the type of the fabric product can be identified more easily.
(8) A fabric product handling system comprises: a fabric product identification device described in any one of (1) to (7); and a handling device being controlled based on position information of the specific part of the fabric product from the distinction part. The handling device grasps the fabric product.

According to the system being described above (8), the fabric product identification device can recognize the characterizing part of the fabric product easily with a high accuracy. Consequently, the handling device can grasp easily the characterizing part of the fabric product and other portions based on the characterizing part. The fabric product handling system, which can reset or set out the fabric product easily by the handling device, can be provided.

### Brief Description of the Drawings

Fig.1 is an external perspective view showing a fabric product handling system as an embodiment of the preset invention.
Fig.2 is a picture of the fabric product being obtained as a result of the image data processed in a computer of an embodiment of the present invention.
Fig.3 is a picture of the fabric product being obtained as a result of the processed image data processed in a computer of an embodiment of the present invention.

### Description of the embodiments

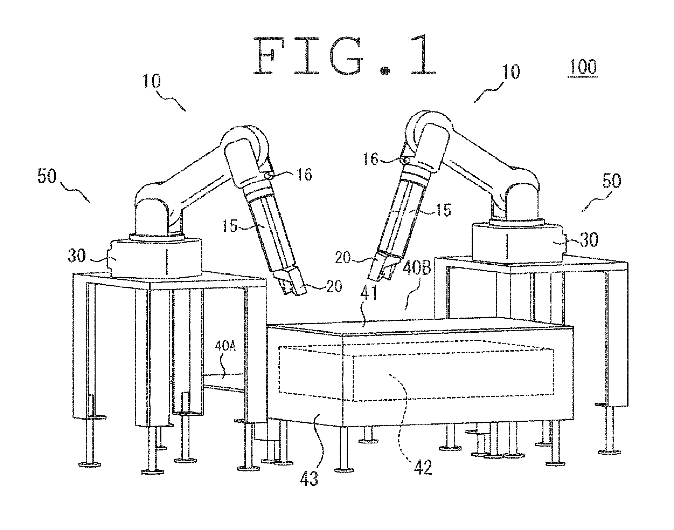

An embodiment of a fabric product handling system of the present invention is explained as follows in reference to Fig.1 to Fig.3.

As shown in Fig.1, an embodiment of a fabric product handling system 100 of the present invention grasps a fabric product being placed on a first table 40A before setting out and resetting the fabric product on a second table 40B. And the fabric product handling system 100 comprises: a fabric product handling robot 10, namely a handling device; and a fabric product identification device 50 having the second table 40B and a part of a controller 30. The part of the controller 30 is a distinction part.

The fabric product handling robot 10 and the fabric product identification device 50 are explained as follows.

### (The fabric product handling robot)

As shown in Fig.1, the fabric product handling robot 10 comprises: a robot hand 20; a robot arm 15; a camera 16, namely an imager; and a part of the controller 30. The embodiment, shown in Fig.1, has a pair [two] of the fabric product handling robots 10, and the first table 40A and the second table 40B are provided between the fabric product handling robots 10.

As shown in Fig.1, the robot hand 20 is fixed rotatably at an end part of the robot arm 15. The robot arm 15 can move the robot hand 20 freely in 3D space. And the camera 16 is placed so as to image around the robot hand 20 from an upper side of the robot arm 15.

The controller 30 controls the robot arm 15 and the robot hand 20 based on the image data being imaged by the camera 16.

### (The fabric product identification device)

As shown in Fig.1, the fabric product identification device 50 mainly comprises: a second table 40B and a part of the controller 30. The part is the distinction part. The second table 40B and the distinction part are explained as follows. Other parts of the controller 30 are also explained.

### (1) The second table

As shown in Fig.1, the second table 40B comprises: a transparent part 41, which the fabric product is placed on, which the light rays pass through, being provided at a top surface as a top panel and being transparent; a light source 42 provided on the opposite side of a first side which the fabric product is placed on; a casing 43 being made of opaque material, fixing and supporting the transparent part 41, and accommodating the light source 42.

Examples of the transparent part 41 are a transparent plastic plate and a transparent glass plate or the like. The light source 42 can change the quantity of light rays by orders from the controller 30 or direct operation by an operator. Examples of the casing 43 are any kinds of metal plates. All opaque material can be adopted for the casing 43.

### (2) The controller

The controller 30 comprises: a motherboard, a CPU, a main memory, a hard disk drive, a USB interface board, an RS-232C interface board, or the like. Distance determination software, fabric product handling robot control software, image processing software [a principal part of the image processing part], fabric product distinction software [a principal part of the distinction part], or the like are installed on the hard disk drive. All software is run with the CPU, the main memory, and the others. Process of the software is explained as follows.

### (The process by the distance determination software)

When images are created simultaneously with the two cameras 16, the controller 30 collects data of the images with the distance determination software. Then, the controller 30 makes correspondence relationship between two image elements of both images into data with the distance determination software. Subsequently, the controller 30 determines a distance to "two dimension image coordinate point" in the images based on "stereo function" and "data of the correspondence relationship between two image elements." Then, camera module relates similar objects in both images by scanning the image elements in a transverse direction. By completing the search for all image elements, the distance to the object in the image is determined.

More detail will not be explained, because such a method has been known to one of ordinary skill in the art.

### (The process by the fabric product handling robot control software)

The fabric product handling robot control software in the controller 30 determines a position of the fabric product to be grasped, and creates control signals for a sequence of actions for the fabric product handling robot 10. The sequence of actions means actions from a grasp process to a fabric product setting out process. The signals are transmitted to the fabric product handling robot 10 in sequence.

### (The process by the image processing software)

One fabric product in a pile of the fabric products is grasped and placed on the second table 40B by the fabric product handling robot operated with the fabric product handling robot control software. When the fabric product is placed on the second table 40B, the light source 42 is in power-on state. Then, first, the image processing software, a principal part of the image processing part, in the controller 30 creates a control signal for controlling the cameras 16 so as to take an image of the fabric product. Second, the control signal is transmitted to the cameras 16. The cameras 16 take images of the fabric product under as dark as possible. Finally, the cameras 16 create the image data of the fabric product.

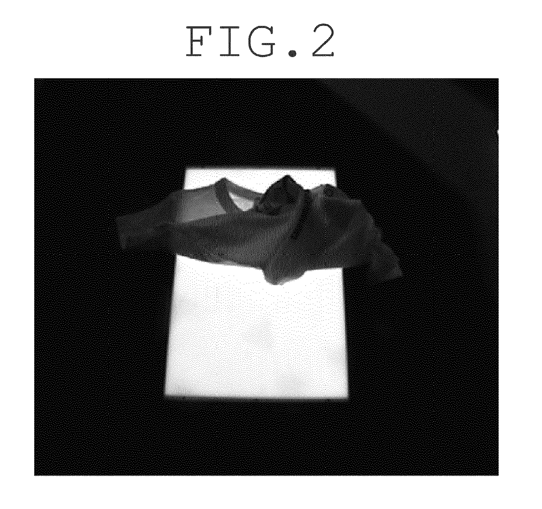

One example for creating the image data is explained as follows. When a T-shirt, an example of the fabric product, is placed on the second table 40B image data, as shown in Fig.2, is created. This image data is gray scale data. Sleeves and lower lateral side of the T-shirt are folded toward a chest and a ventral portion. And a portion of the T-shirt, which is not placed on the transparent part 41 of the second table 40B, droops from the transparent part 41. The transparent part 41 is shown as an almost-square white and gray area in Fig.2. And the periphery of the transparent part 41, which is not illuminated, is shown as a black area.

The image processing software classifies a passed light quantity distribution by ranges of the passed light quantity. And the image processing software sections the created image data into some areas by predetermined ranges of quantity of the passed light. Furthermore, the software processes the image data so as to show the areas having different brightness. Finally, the software creates the processed image data (Creation of the processed image data) . At a same time, brightness data of each area of the processed image data also is created.

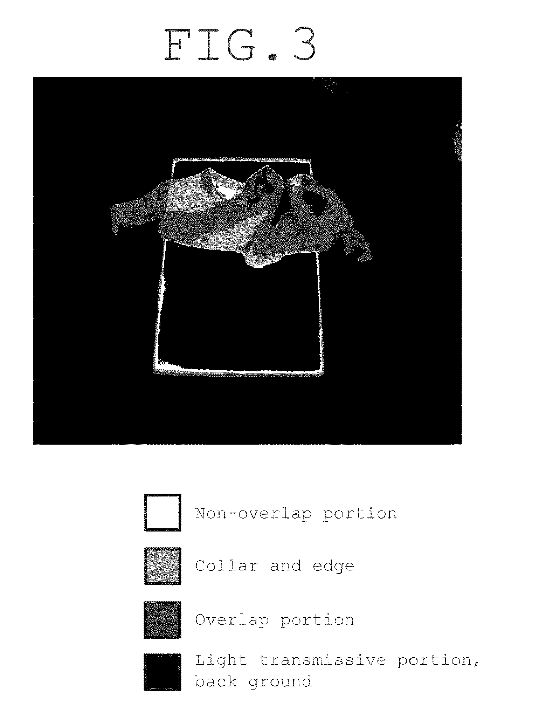

One example of creating the processed image data is explained as follows. The image processing software classifies the passed light quantity distribution of the T-shirt from the image data as shown in Fig.2. The passed light quantity distribution is classified into five ranges of the passed light quantity. The five ranges are 0 to 42 gradations, 43 to 84 gradations, 85 to 154 gradations, 155 to 205 gradations, and 206 to 255 gradations in total 256 gradations. Then, the surface of the T-shirt on the second table 40B is sectioned into four areas. The four areas are : (a) "non-overlap portion" in which fabrics are not overlap each other; (b) "overlap portion" in which two or more fabrics are overlap each other; (c) "collar and edge" which mean the collar of the T-shirt and the edge of the T-shirt; (d) "light transmissive portion" of the transparent part 41 which the light from the light source 42 passes through; and "back ground" being the portion of the T-shirt except above (a) to (d). The image data is processed so as to display the areas (a) to (d) in four gradations. Then the processed image data is created. For example, each area (a) to (d) is respectively set (a) 205 gradations, (b) 160 gradations, (c) 80 gradations, and (d) zero gradations in total 256 gradations as shown in Fig.3. The brightness data for each area in the processed image is also created.

### (The process by the fabric product distinction software)

In the controller 30, the fabric product distinction software, the principal part of the distinction part, distinguishes a position of the specific part of the fabric product based on the brightness data for each area in the processed image data. In other words, the fabric product distinction software distinguishes a brightness data area, which has a predetermined value in the brightness data, as the specific part [the characterizing part] of the fabric product. When the specific part is distinguished, the type of the fabric product is identified by comparing the specific part to a predetermined characterizing parts of each fabric product stored in the hard disk drive. The predetermined characterizing part may be shapes of the edge, sleeves, collars of cloths, shapes of edge part of sheets and towels. The checking method may be a pattern matching method or the like.

One example of the distinction process by the fabric product distinction software is explained as follows. The processed image data, as shown in Fig.3, is used. The data areas of "collars" and "edges" are preset so as to be recognized as "collars", the characterizing part of T-shirt. Consequently, the fabric product distinction software recognizes the data areas of "collars" and "edges" as "collar", the specific part. When the "collar" is recognized, the T-shirt is identified by comparing [the pattern matching] the specific part to the data of predetermined characterizing parts of each fabric product stored in the hard disk drive. In this example, the data of predetermined characterizing parts is the data of collars of the T-shirt.

If the data of the quantity of the light rays at predetermined portion of the fabric product or the brightness data corresponding to the brightness data in the processed image data does not exist, the fabric product distinction software distinguishes that the specific part of the fabric product does not exist in the processed image data. Then, the fabric product handling robot control software controls the fabric product handling robot so as to pick up the fabric product and drop. After processing the image data by the image processing software, the fabric product distinction software runs the distinction process again. In addition, these processes repeat until completion of the identification of the fabric product.

### (Features of the fabric product handling system having the fabric product identification device)

The fabric product handling system 100 according to the present invention comprises the fabric product identification device 50 having the features as follows. The fabric product identification device 50 illuminates the fabric product being placed on the transparent part 41 of the second table 40B with light rays from the light source 42. And the fabric product identification device 50 comprises a camera 16 to take the image data for measuring the quantity of the passed light rays though the fabric product. The specific part of the fabric product can be distinguished based on the brightness data and the quantity of the passed light rays with the fabric product distinction software, the principal part of the distinction part. The brightness data is in the processed image data created by the process with the image processing software. The quantity of the passed light rays is of the specific part of the fabric product. Consequently, the characterizing part can be recognized and the type of the fabric product can be identified easily and with a high accuracy based on the characterizing part of the fabric product. The characterizing part of the fabric product may be recognized in the rumpled state without setting out completely the fabric product, suchascloths. As a result, the type of the fabric product maybe identified based on the characterizing part.

The fabric product handling robot 10, the handling device, can grasp easily the characterizing part of the fabric product or another position determined by the characterizing part as the starting point, because the characterizing part of the fabric product already has been recognized by the fabric product identification device 50. Consequently, the fabric product handling system 100, which can reset or set out the fabric product easily by the fabric product identification device 50, can be provided.

### (Another embodiment)

Various changes may be made without departing from the scope of the present invention. Consequently, embodiments of the present invention are not limited to above embodiments. Another embodiment is explained as follows.

In the fabric product identification device 50, the fabric product distinction software in the controller 30 distinguishes the specific part of the fabric product based on the quantity of the passed light rays from the image data imaged by the camera 16. The fabric product distinction software may distinguish the specific part by other ways (A) to (C) below.
(A) The fabric product distinction software, the principal part of the distinction part, in the controller 30 distinguishes the part of the fabric product, where the quantity of the passed light rays is smaller than the predetermined value, as the specific part of the fabric product based on the image data imaged by the camera 16. The specific part of the fabric product may be the collar of the fabric cloth, which the light rays are difficult to pass through. The characterizing part, for example the collar, can be recognized by above way. Consequently, the type of the fabric product can be identified based on the characterizing part of the fabric product. Especially, by distinguishing the continuous area, where the quantity of the passed light rays are smaller than the predetermined value, as the characterizing part of the fabric product, the characterizing part can be recognized with a higher degree of accuracy. It is noted that the continuous area may be a belt-like area. And the characterizing part is a collar of cloth, for example. Consequently, the type of the fabric product can be identified easily based on the characterizing part of the fabric product.
(B) The fabric product distinction software, the principal part of the distinction part, in the controller 30 distinguishes the part of the fabric product, where the quantity of the passed light rays is larger than the predetermined value, as the specific part of the fabric product based on the image data imaged by the camera 16. The characterizing part of the fabric product may be the collar of the fabric cloth made of material that the light rays are easy to pass through, transparent material or mesh for example. The characterizing part, for example the collar, can be recognized by above way. Consequently, the type of the fabric product can be identified based on the characterizing part of the fabric product. Especially, by distinguishing the continuous area, where the quantity of the passed light rays are larger than the predetermined value, as the specific part of the fabric product, the characterizing part can be recognized with a higher degree of accuracy. Consequently, the type of the fabric product can be identified easily based on the characterizing part of the fabric product.
(C) The fabric product distinction software, the principal part of the distinction part, in the controller 30 distinguishes the part of the fabric product, where the quantity of the passed light rays is in predetermined range, as the specific part of the fabric product based on the image data imaged by the camera 16. The characterizing part of the fabric product maybe the collar of the fabric clothmade of translucent material, which some quantity of the light rays can pass through. The characterizing part, for example the collar of the fabric cloth made of translucent material, can be recognized by above way. Consequently, the type of the fabric product can be identified based on the characterizing part of the fabric product. Especially, by distinguishing the continuous area, where the quantity of the passed light rays is in the predetermined range, as the characterizing part of the fabric product, the characterizing part can be recognized with a higher degree of accuracy. It is noted that the continuous area may be a belt-like area. And the characterizing part is a collar of cloth, for example. Consequently, the type of the fabric product can be identified easily based on the characterizing part of the fabric product.
(D) And the fabric product identification device 50 in above embodiment can be modified as follows. A shape image data extracting software may be installed in the hard disk drive of the controller 30. The shape image data extracting software, a principal part of the shape image data extracting part, extracts shape image data by recognizing boundary lines of the sectioned areas of the image data of the fabric product. And the fabric product distinction software, the principal part of the distinction part, may distinguish the position of the specific part based on the shape image data made by the image data extracting software and the shape image data of the specific part of the various fabric products stored in the hard disk drive in advance. For example, the boundary lines between the area of the sleeve of the T-shirt as shown in Fig.3 and the other areas are clear. By extracting the shape image data from the boundary lines between the area of the sleeve and the other areas as the shape, and comparing the extracted shape image data and the shape image data of the specific parts of the various fabric products stored in the hard disk drive in the controller 30, the position of the specific part of the fabric product may be distinguished. This comparison maybe done by known pat tern matching method. By distinguishing the specific part of the fabric product based on the shape of the each area, the characterizing part can be distinguished with a higher degree of accuracy. Consequently, the type of the fabric product can be identified based on the characterizing part of the fabric product. In addition, in the case the shape image data from the shape image data extracting software does not match with all of the shape image data of the specific parts of the various fabric products stored in the hard disk drive in the controller 30, the distinction part may judge that the processed image data does not have the specific part of the fabric product.
(E) The fabric product identification device 50 in above embodiment may include a light quantity controller. The light quantity controller controls the quantity of the light rays from the light source 42 based on the information of the quantity of the passed light rays from the image processing software, the principal part of the image processing part, of the controller 30. According to this embodiment, the quantity of the light rays from the light source 42 can be changed appropriately based on the fabric material or the thickness of the fabric product. Consequently, the characterizing part of the fabric product can be recognized easily. As a result, the fabric product identification device 50, which can identify the type of the fabric product easily, can be provided. It is noted that the brightness data, which is explained in the foregoing embodiment, may be corrected based on the quantity of the light rays.
(F) In the fabric product identification device 50 in above embodiment, the light source 42 may emit infrared rays, and the cameras 16 may image the infrared rays. And the image processing software, the principal part of the image processing part, may detect a quantity of passed infrared rays. Furthermore, the fabric product identification device 50 may include an intensity controller configured to control the intensity of the infrared rays from the light source 42 based on the information of the quantity of the passed infrared rays from the image processing software. The fabric product distinction software in this embodiment is modified so as to be able to use the processed image data, which has the data of the quantity of the passed infrared rays from the image processing software. According to this embodiment, the intensity of the infrared rays from the light source 42 can be changed appropriately based on the fabric material or the thickness of the fabric product. Consequently, the characterizing part of the fabric product can be recognized easily. As a result, the fabric product identification device 50, which can identify the type of the fabric product easily, can be provided.
(G) As shown in Fig.3, there are "a collar" and "an edge" near "the non-overlap portion." After distinguishing the inside portion of the non-overlap portion, when the collar and the edge are near the non-overlap portion, the fabric product distinction software, the principal part of the distinction part, identifies the fabric product. Consequently, the accuracy of the identification can be higher.
(H) In above embodiment, the type of the fabricproduct is identified by the pattern matching of the characterizing part of the fabric product with the fabric product distinction software. Alternatively, the type of the fabric product may be identified by detecting the shape image data of the edge part of the fabric product and comparing the detected shape image data and the shape image data of the fabric products stored in the hard disk unit in advance. Then, the type of the fabric product may be identified.
(I) In above embodiment, the distribution of the passed light rays through the T-shirt is sectioned into five areas by the quantity of the passed light rays based on the image data of T-shirt as shown in Fig.3. The five areas are 0 to 42 gradations, 43 to 84 gradations, 85 to 154 gradations, 155 to 205 gradations, and 206 to 255 gradations in the total 256 gradations. But the range of each area may be changed appropriately based on the material and the thickness of the T-shirt or the like. Furthermore, in the above embodiment, the five areas about the quantity of the passed light rays are sectioned into the four areas (a) to (d) . And the (a) to (d) areas are displayed using four gradations [(a) area is 205 gradation in the 256 gradations, (b) area is 160 gradations, (c) area is 80 gradations, and (d) area is 0 gradation] in order to obtain the processed image data, as shown in Fig.3. The gradations are not limited to these four gradation values, and each gradation value may be changed for making the processed image data.

## Claims

1. A fabric product identification device comprising:
a table, which the fabric product is placed on, having a transparent part, which light rays pass through;
a light source provided on the opposite side of a first side of the table, which the fabric product is placed on;
an imager, provided at the first side, imaging and making image data of the fabric product, which is illuminated by the light rays, and provided at the first side; and
a distinction part distinguishing a specific part of the fabric product based on information of a quantity of the passed light rays from the image data.

2. The fabric product identification device according to claim 1, wherein,
the distinction part distinguishes the part as the specific part of the fabric product, when the quantity of the passed light rays of the part is higher than a predetermined value, lower than a predetermined value, or in a range.

3. The fabric product identification device according to claim 1 or claim 2, wherein
the distinction part distinguishes an area having parts side by side, as the specific part of the fabric product,
the quantity of the passed light rays of each of the parts is smaller or larger than a predetermined value, or within a predetermined range.

4. The fabric product identification device set forth in any one of claims 1 to 3, further comprising:
an image processor classifying a distribution of the quantity of the passed light rays by a range of the quantity in the image data of the fabric product, sectioning the image data into some areas by the range of the quantity of the passed light rays, and displaying the areas with different brightness by an image processing, to make processed image data,
wherein the distinction part distinguishes a position of the specific part of the fabric product based on brightness data in the processed image data.

5. The fabric product identification device according to claim 4, further comprising:
a shape image data extracting part for extracting a shape of each area by recognizing a border between areas as a shape,
wherein the distinction part distinguishes the position of the specific part based on shape image data extracted by the shape image data extracting part and predetermined shape image data of the specific part of the fabric product.

6. The fabric product identification device set forth in any one of claims 1 to 5, further comprising:
a light quantity controller for controlling a quantity of the light rays from the light source based on the information of the quantity of the passed light rays from the image processing part.

7. The fabric product identification device set forth in any one of claims 1 to 5, further comprising:
an intensity controller,
wherein the light rays are infrared light and the imager makes images from the infrared light, and
the intensity controller controls an intensity of the infrared light from the light source based on the information of the quantity of the passed infrared light rays from the image processing part.

8. A fabric product handling system comprising:
the fabric product identification device set forth in any one of claims 1 to 7; and
a handling device being controlled based on position information of the specific part of the fabric product from the distinction part, and grasping the fabric product.
